# EUROPÄISCHE PATENTSCHRIFT

(11) **EP 1 342 624 B1**
(45) Veröffentlichungstag und Bekanntmachung des Hinweises auf die Patenterteilung: **14.06.2006**
(21) Anmeldenummer: 03405063.3
(22) Anmeldetag: 06.02.2003
(51) Int. Cl.: B60R 19/18, B60J 5/04

(54) **Stossstange für ein Fahrzeug**
Vehicle bumper
Pare-chocs pour véhicule

(30) Priorität: 04.03.2002 DE 20203374 U; 24.10.2002 DE 20216489 U
(43) Veröffentlichungstag der Anmeldung: 10.09.2003
(73) Patentinhaber: Alcan Technology & Management Ltd., 8212 Neuhausen am Rheinfall (CH)
(72) Erfinder: Frank, Simon, 78250 Tengen (DE)

(56) Entgegenhaltungen:
- EP-A- 0 467 829
- DE-A- 4 306 824
- US-A- 5 997 058
- US-B1- 6 343 820
- PATENT ABSTRACTS OF JAPAN vol. 1999, no. 11, 30. September 1999 (1999-09-30) -& JP 11 170935 A (NIPPON STEEL CORP), 29. Juni 1999 (1999-06-29)

## Beschreibung

Die Erfindung betrifft eine Stoßstange für ein Fahrzeug gemäss Oberbegriff des Anspruch 1.

Die Publikationsschrift JP 11-170935 A offenbart eine gattungsgemäße Fahrzeugstossstange aus einem Hohlprofil, wobei in den Eckbereichen des Hohlprofils jeweils Verstärkungsrippen angebracht sind.

Eine weitere stoßstange ist der CH 689 638 A5 zu entnehmen. Bei dieser Stoßstange ist zwischen den Querwänden zumindest ein Quersteg angeordnet, der die beiden Profilwände miteinander verbindet und das Hohlprofil in Kammern unterteilt. Zudem ist zwischen den Profilwänden ein Vertikalsteg angeordnet, welcher die beiden Querwände miteinander verbindet sowie ein primäres Verformungsteil mit an den Druckgurt angrenzenden Kammern und ein sekundäres Verformungsteil mit an den Zuggurt anschließenden Kammern des Hohlprofils bestimmt. Diese Ausgestaltung soll ein hohes Maß an Formhaltigkeit bei ausreichendem Kompensationsvermögen für eine auftreffende Verformungsenergie anbieten.

Die US 6,343,820 und US 5,997,058 beschreiben Stossstangen mit aufgedickten Wandbereichen.

Die Offenlegungsschrift DE 43 06 824 A1 offenbart einen Seitenaufprallträger für Fahrzeugtüren. Der Seitenaufprallträger enthält zwei sich parallel gegenüberliegende Wände, welche durch Stege miteinander verbunden sind. Die Stege sind durch eine Zwischenwand in Steghäfften unterteilt. In den-Steghälften sind zwecks abschnittsweiser Reduzierung des Breitenmasses zwischen den beiden Wänden Falten angebracht.

Die EP 0 467 829 beschreibt ebenfalls einen Seitenaufprallträger aus einem Hohlprofil, enthaltend zwei sich parallel gegenüberliegende, über Stege miteinander verbundene Profilwände.

In Kenntnis dieses Standes der Technik hat sich der Erfinder das Ziel gesetzt, eine Verbesserung der Festigkeitsverhältnisse auch dann zu schaffen, wenn Querwände der beschriebenen Art nicht oder nur in geringem Maße vorhanden sind. Zudem soll die Festigkeit eines solchen Hohlprofiles auch dann verbessert werden, wenn in der einen oder anderen der Quer- oder Profilwände Durchbrüche -- beispielsweise zum Festlegen von Schrauben od.dgl. Verbindungselementen angebracht sind.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist im Profilinnenraum an wenigstens einer der Querwände und/oder an eine mit dieser verbundene Profilwand ein Verstärkungswulst angeformt. Nach einem anderen Merkmal der Erfindung befindet sich der Verstärkungswulst im Eckbereich zwischen den Querwänden und wenigstens einer der mit diesen verbundenen Profilwände, dies bevorzugt in den einander gegenüberliegenden Eckbereichen zwischen den Querwänden und der dem Fahrzeug zu weisenden Profilinnenwand.

Dank dieser Maßgaben werden bei einem Aufprall od.dgl. Krafteinwirkung eingeleitete Verformungskräfte an den Verstärkungswulsten abgefangen und quer zu den Profilwänden abgeleitet. Durch einen so entstehenden Spannungssprung wird die Festigkeit der Stoßstange erheblich erhöht.

Der erwähnte Spannungssprung kann noch dadurch unterstützt werden, dass in die eine Außenfläche des Verstärkungswulstes eine Längsnut eingeformt wird, die parallel zu der benachbarten Profilwand verläuft und in Abstand zu letzterer von einer Längsrippe begrenzt wird, die Teil des Verstärkungswulstes ist.

Als günstig hat es sich erwiesen, dass die Einformungen oder Längsnuten bzw. die Längsrippen der einander an einer Profilwand gegenüberliegenden Verstärkungswulste miteinander fluchten, als in einer gemeinsamen Ebene liegen. Zudem soll erfindungsgemäß die Längsrippe so ausgebildet werden, dass sie eine zu der die Längsnut anderseits begrenzenden Profilwand etwa parallele Außenfläche des Verstärkungswulstes bestimmt, d.h. einen Teil von dieser darstellt. Im übrigen soll die Breite der Längsnut bevorzugt etwa der Breite der Längsrippe entsprechen sowie die Tiefe der Längsnut etwa gleich ihrer eigenen Breite sein. Zudem ist vorgesehen, das Maß der Tiefe der Längsnut entsprechend einem Drittel oder einer Hälfte der Höhe des Verstärkungswulstes zu wählen; die Dicke der Profilwand soll dabei zumindest der Breite der benachbarten Längsnut entsprechen.

Insgesamt entsteht so ein Hohlprofil, dessen Widerstand gegen Verformungskräfte bei einem Zusammenstoß od.gl. erheblich größer ist als bei vergleichbaren Profilen ohne die erfindungsgemäße Eckengestaltung.

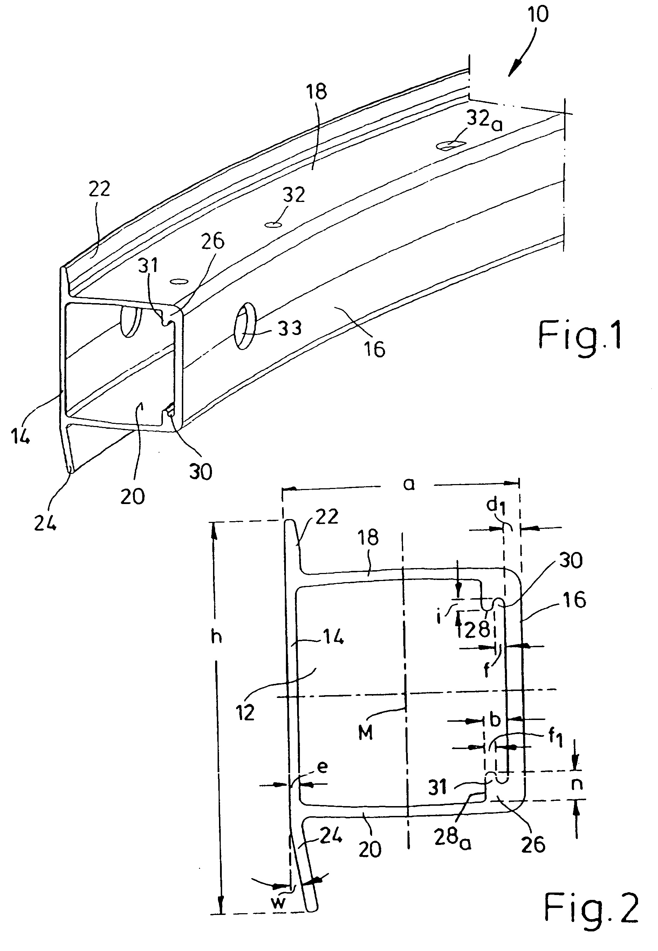

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: eine Schrägsicht auf einen Teil eines Hohlprofils zur Verwendung als Stoßstange;
- Fig. 2:: eine gegenüber Fig. 1 vergrößerte Stirnansicht des Hohlprofils.

Ein aus einer Aluminiumlegierung stranggepresstes Hohlprofil 10 zur Verwendung als Stoßstange für einen aus Gründen der Übersichtlichkeit nicht dargestellten Personenkraftwagen ist von nahezu quadratischem Querschnitt mit einer äußeren Breite a von beispielsweise 64 mm. Eine in der Zeichnung linke Profilaußenwand 14 ist als Druckgurt mit einer Dicke e von 3 mm dünner als die parallele Profilinnenwand 16 einer Dicke e₁ von 4 mm. Jenseits eines Paares angeformter Querwände, die als Profilfirstwand 18 bzw. als Profilboden 20 ausgebildet sind, setzt sich die Profilaußenwand 14 einer Gesamthöhe h von hier 90 mm als Firststeg 22 bzw. als -- zur Profilmittelachse M in einem spitzen Winkel w -- geneigter Bodensteg 24 fort.

In den von der Profilfirstwand 18 bzw. dem Profilboden 20 einerseits sowie der Profilinnenwand 16 als Zuggurt anderseits gebildeten Ecken des Hohlprofils 10 ist im Profilinnenraum 12 jeweils ein Verstärkungswulst 26 einer Breite b von 6 mm und einer Höhe n von 7 mm angeformt. Dessen Außenflächen 28 bzw. 28ₐ verlaufen etwa parallel zur benachbarten Profilfront- oder -innenwand 16 sowie zu der anschließenden Profilfirstwand 18 bzw. dem Profilboden 20. Durch das Einbringen einer zur Profilinnenwand 16 parallelen Einformung als Längsnut 30 der Breite f von 3 mm und einer Tiefe i gleichen Ausmaßes in jenen Verstärkungswulst 26 entsteht jeweils eine Längsrippe 31 einer der Längsnut 30 entsprechenden Breite f₁ und ebenfalls der Höhe i; die beiden in die Außenfläche 28 eingebrachten Längsnuten 30 liegen in einer gemeinsamen Ebene, fluchten also miteinander.

Durch diesen Verstärkungswulst 26 wird die Festigkeit des Hohlprofils 10 erheblich erhöht, da etwa bei einem Aufprall entstehende Verformungskräfte, die etwa in Fahrzeuglängsachse eingeleitet werden, vor der Profilinnenwand 16 durch die Verstärkungswulste 26 quer zu den Profilwänden 14, 16 umgelenkt werden. Beispielsweise wird nunmehr das Einbringen von Durchbrüchen 32, 32ₐ in die Querwand 18, 20 oder von Durchbrüchen 33 in die Profilaußen- bzw. -innenwand 14, 16 ohne Minderung der Festigkeit des Hohlprofiles 10 möglich.

## Patentansprüche

1. Stossstange für ein Fahrzeug mit einem aus einer Leichtmetalllegierung stranggepressten Hohlprofil (10) aus in Abstand zueinander als Druckgurt bzw. Zuggurt angeordneten Profilwänden (14, 16) sowie einem Paar diese verbindender Querwände (18, 20), wobei im Profilinnenraum (12) in wenigstens einem Eckbereich zwischen einer Querwand (18, 20) und der mit diesen verbundenen Profilinnenwand (14, 16) ein Verstärkungswulst (26) angeordnet ist,
**dadurch gekennzeichnet, dass**
der Verstärkungswulst (26) etwa parallel zu der benachbarten Profilwand (14, 16) mit einer nutartigen Einformung (30) versehen ist, wobei die Einformung (30) in Abstand (f) zur Profilwand (16) von einer Längsrippe (31) begrenzt ist.

2. Stoßstange nach Anspruch 1, **dadurch gekennzeichnet, dass** der Verstärkungswulst (26) in wenigstens einem Eckbereich zwischen den Querwänden (18, 20) und der mit diesen verbundenen, dem Fahrzeug zu weisenden Profilinnenwand (16) angeordnet ist, bevorzugt in beiden einander gegenüberliegenden Eckbereichen.

3. Stoßstange nach Anspruch 1, **dadurch gekennzeichnet, dass** die Einformungen oder Längsnuten (30) bzw. die Längsrippen (31) der einander an einer Profilwand (16) gegenüberliegenden Verstärkungswulste (26) miteinander fluchten (Fig. 2).

4. Stoßstange nach Anspruch 1 oder 3, **dadurch gekennzeichnet, dass** die Längsrippe (31) eine zu der die Längsnut (30) anderseits begrenzenden Profilwand (16) etwa parallele Außenfläche (28ₐ) des Verstärkungswulstes (26) bestimmt.

5. Stoßstange nach einem der Ansprüche 1 und 3 bis 4, **dadurch gekennzeichnet, dass** die Breite (f) der Längsnut (30) etwa der Breite (f₁) der Längsrippe (31) entspricht.

6. Stoßstange nach einem der Ansprüche 1 und 3 bis 5, **dadurch gekennzeichnet, dass** die Tiefe (i) der Längsnut (30) etwa ihrer Breite (f) entspricht.

7. Stoßstange nach einem der Ansprüche 1 und 3 bis 6, **dadurch gekennzeichnet, dass** das Maß der Tiefe (i) der Längsnut (30) etwa einem Drittel bis zu einer Hälfte der Höhe (n) des Verstärkungswulstes entspricht.

8. Stoßstange nach einem der Ansprüche 5 bis 7, **dadurch gekennzeichnet, dass** die Dicke (d₁) der Profilwand (16) zumindest der Breite (f) der benachbarten Längsnut (30) entspricht.

## Claims

1. Bumper for a vehicle, comprising a hollow section (10) extruded from a light metal alloy consisting of section walls (14, 16) serving as a compression member and a tension member respectively arranged at a distance from one another and a pair of transverse walls (18, 20) joining them together, a reinforcing bead (26) being arranged in the interior (12) of the section in at least one corner region between a transverse wall (18, 20) and the inner section wall (14, 16) joined thereto, **characterised in that** the reinforcing bead (26) is provided with a groove-shaped recess (30) extending substantially parallel to the adjacent section wall (14, 16), the recess (30) being delimited at a distance (f) from the section wall (16) by a longitudinal rib (31).

2. Bumper according to claim 1, **characterised in that** the reinforcing bead (26) is arranged in at least one corner region between the transverse walls (18, 20) and the inner section wall (16) directed towards the vehicle joined thereto, preferably in both opposing corner regions.

3. Bumper according to claim 1, **characterised in that** the recesses or longitudinal grooves (30) or the longitudinal ribs (31) of the reinforcing beads (26) situated opposite one another on one section wall (16) are aligned with one another (Fig. 2).

4. Bumper according to claim 1 or claim 3, **characterised in that** the longitudinal rib (31) defines an outer surface (28ₐ) of the reinforcing bead (26) extending substantially parallel to the section wall (16) delimiting the longitudinal groove (30).

5. Bumper according to one of claims 1 and 3 to 4, **characterised in that** the width (f) of the longitudinal groove (30) corresponds substantially to the width (f₁) of the longitudinal rib (31).

6. Bumper according to one of claims 1 and 3 to 5, **characterised in that** the depth (i) of the longitudinal grove (30) corresponds substantially to its width (f).

7. Bumper according to one of claims 1 and 3 to 6, **characterised in that** the depth (i) of the longitudinal groove (30) corresponds substantially to one third to one half of the height (n) of the reinforcing bead.

8. Bumper according to one of claims 5 to 7, **characterised in that** the thickness (d₁) of the section wall (16) corresponds at least to the width (f) of the adjacent longitudinal groove (30).

## Revendications

1. Pare-chocs pour un véhicule avec un profil creux (10) extrudé en un alliage d'aluminium en parois de profil (14, 16) disposées à distance mutuelle en tant que membrure de compression ou que membrure de traction et avec une paire de parois transversales (18, 20) reliant ces dernières, un bourrelet de renfort (26) étant disposé à l'intérieur du profil (12), dans au moins une zone angulaire entre une paroi transversale (18, 20) et la paroi intérieure du profil (14, 16) reliée avec cette dernière,
**caractérisé en ce que**
le bourrelet de renfort (26) est muni approximativement à la parallèle de la paroi voisine du profil (14, 16) d'une moulure du type d'une cannelure (30), la moulure (30) étant délimitée à distance (f) de la paroi du profil (16) par une nervure longitudinale (31).

2. Pare-chocs selon la revendication 1, **caractérisé en ce que** le bourrelet de renfort (26) est disposé dans au moins une zone angulaire entre les parois transversales (18, 20) et la paroi intérieure du profil (16) reliée avec cette dernière, dirigée vers le véhicule, de préférence dans les deux zones angulaires opposées.

3. Pare-chocs selon la revendication 1, **caractérisé en ce que** les moulures ou cannelures longitudinales (30) ou les nervures longitudinales (31) des bourrelets de renfort (26) opposés sur une paroi du profil (16) sont mutuellement alignées (figure 2).

4. Pare-chocs selon la revendication 1 ou 3, **caractérisé en ce que** la nervure longitudinale (31) définit une surface extérieure (28ₐ) du bourrelet de renfort (26) approximativement parallèle à la paroi du profil (16) délimitant d'autre part le cannelure longitudinale (30).

5. Pare-chocs selon l'une quelconque des revendications 1 et 3 à 4, **caractérisé en ce que** la largeur (f) de la cannelure longitudinale (30) correspond approximativement à la largeur (f₁) de la nervure longitudinale (31).

6. Pare-chocs selon l'une quelconque des revendications 1 et 3 à 5, **caractérisé en ce que** la profondeur (i) de la cannelure longitudinale (30) correspond approximativement à sa largeur (f).

7. Pare-chocs selon l'une quelconque des revendications 1 et 3 à 6, **caractérisé en ce que** la dimension de la profondeur (i) de la cannelure longitudinale (30) correspond approximativement à un tiers jusqu'à une moitié de la hauteur (n) du bourrelet de renfort.

8. Pare-chocs selon l'une quelconque des revendications 5 à 7, **caractérisé en ce que** l'épaisseur (d₁) de la paroi du profil (16) correspond au moins à la largeur (f) de la cannelure longitudinale voisine (30).
